# EUROPEAN PATENT SPECIFICATION

(11) **EP 2 175 676 B1**
(45) Date of publication and mention of the grant of the patent: **11.05.2011**
(21) Application number: 08290942.5
(22) Date of filing: 07.10.2008
(51) Int. Cl.: H04W 24/02

(54) **A method of self-configuration of a cellular radio network**
Verfahren zur Eigenkonfiguration eines zellularen Funknetzwerks
Procédé d'auto-configuration d'un réseau radio cellulaire

(43) Date of publication of application: 14.04.2010
(73) Proprietor: Alcatel Lucent, 75008 Paris (FR)
(72) Inventor: Eckhardt, Harald, 70195 Stuttgart (DE); Ambrosy, Anton, 75233 Tiefenbronn (DE)
(74) Representative: Schmidt, Werner Karl

(56) References cited:
- WO-A-2008/042414
- WO-A-2008/051458
- WO-A-2008/082587

## Description

The present invention relates to a method of self-configuration of a cellular radio network, and a base station to execute said method.

Today, a base station operating in a radio access network, e.g. in a 3GPP or an IEEE network, is configured by downloading specified operational parameters from an operation system (3GPP = 3rd Generation Partnership Project; IEEE = Institute of Electrical and Electronics Engineers). Other discussed solutions are based on a communication over a backhaul network or an radio frequency (= RF) scanning mechanism of base stations, which is currently discussed in 3GPP. The RF scanning solution has the drawback that parameters which are transmitted, e.g. over a broadcast channel, may not be readable by an implemented terminal of the base station or cell when radio conditions are too poor due to too large distances, especially in rural environments.

An example can be found in WO2008/082597.

It is the object of the present invention to provide an improved method for self-configuration of a cellular radio network.

The object of the present invention is achieved by a method of self-configuration, preferably self-configuration and/or self-optimisation, of a cellular radio network comprising a first base station and one or more neighbour base stations neighbouring the first base station, the method comprising the steps of sending an advertisement from the first base station over a radio frequency channel to the one or more neighbour base stations by means of a terminal unit providing terminal capabilities which is attached to or integrated in the first base station and/or the one or more neighbour base stations, and, based on this advertisement, exchanging data between the first base station and the one or more neighbour base stations for self-configuration, preferably self configuration and/or self-optimisation, of the cellular radio network. The object of the present invention is further achieved by a first base station of a cellular radio network, the cellular radio network further comprising one or more neighbour base stations neighbouring the first base station, whereby the first base station comprises a terminal unit providing terminal capabilities integrated in the first base station or an interface for attaching a terminal unit providing terminal capabilities, the first base station further comprising a control unit adapted to send an advertisement from the first base station over a radio frequency channel to the one or more neighbour base stations by means of the terminal unit, and, based on this advertisement, exchange data between the first base station and the one or more neighbour base stations for self-configuration of the cellular radio network.

The self-configuration of the cellular radio network comprises the self-configuration and/or self optimisation of one or more base stations of the cellular radio network, in particular the self-configuration and/or self-optimisation of said first base station. The process of self-configuration may comprise the process of self-optimisation. A base station of the cellular radio network is referred to as a neighbour base station of the first base station if the radio coverage area of the neighbour base station is adjacent to the radio coverage area of the first base station. Sending of data "over a radio frequency channel" may also be referred to as "over the air".

According to the present invention, a, preferably special, terminal unit providing terminal capabilities may be integrated in or attached to a base station or cell, which can send uplink data towards one or more neighbour base stations. It is also possible that one or more, preferably special, terminal units providing terminal capabilities are integrated in or attached to the one or more neighbour base stations.

The present invention provides new communication relations between a first base station and one or more neighbour base stations of a cellular radio network. The present invention provides a direct communication between neighbouring base stations, in particular over the air. As a consequence, the self-configuration provided by the present invention is adaptive.

The present invention provides, for a decentralised network architecture, a method how a base station receives / exchanges operational parameters for self-configuration of cell individual and global parameters, e.g, radio parameters like power settings, pilot patterns or HO parameters, identifiers like Physical Cell ID and Tracking Area ID (HO = hand-over; ID = identifier). One or more of this data is exchanged between the first base station and the one or more neighbour base stations based on the advertisement.

Self-configuration and/or self-optimisation is performed after communicating, by the first base station, with its neighbour base stations or cells and either before the operational mode is started or after as an adaptation to changes in the environmental conditions occurring during operation. As a consequence, the present invention provides to establish communication relations between neighbouring base stations especially for self-configuration and self-optimisation of relevant parameters.

The solutions presented by the present invention use communication mechanisms from the first base station towards neighbour base stations by the use of a, preferably special (= dedicated), terminal unit which is attached to or integrated in the first base station and/or the neighbour base stations. The terminal unit provides the first base station and/or the neighbour base stations with terminal capabilities. The terminal unit may be modified in terms of higher output power or receiver sensitivity.

One of the benefits of the present invention are the new communication relations from a new deployed base station with said special terminal unit to its neighbour base stations to announce its parameter settings and trigger replies.

Self-configuration and self-optimisation of parameter settings can be achieved automatically before and after a new deployed base station starts its operational mode. This is independent from an operation system. Therefore, the present invention helps to essentially reduce efforts required for manual and tool supported provisioning of parameters.

The present invention provides a broad concept for an advanced mobile network, e.g. for 3GPP LTE, IEEE 802.11 or IEEE 802.16 networks (LTE = Long Term Evolution).

Further advantages are achieved by the embodiments of the invention indicated by the dependent claims.

According to a preferred embodiment of the invention, a broadcast uplink channel is provided as said RF channel, for sending the advertisement from the first base station, preferably a terminal unit of the first base station, to the one or more neighbour base stations, preferably one or more terminal units of the one or more neighbour base stations.

Preferably, the advertisement is sent from a special broadcast uplink transmitter of the first base station, said special broadcast uplink transmitter provided by means of a terminal unit associated with the first base station, over the broadcast uplink channel to one or more special uplink radio frequency receivers of the one or more neighbour base stations, said special uplink radio frequency receivers provided by means of one or more terminal units associated with the one or more neighbour base stations.

Preferably, the terminal unit which is attached to or integrated in the first base station and/or the one or more neighbour base stations is used for sending advertisement requests towards all neighbour base stations over the air by the use of a special uplink transmitter channel as the broadcast uplink channel to the special uplink RF receiver.

Preferably, the advertisement signalling in the broadcast uplink band from a special terminal unit of the first base station provides a new communication relation between this first base station and the one or more neighbour base stations.

According to another preferred embodiment of the invention, an uplink channel from the first base station to the one or more neighbour base stations, and/or a downlink channel from the one or more neighbour base stations to the first base station are established. This communication connection between the first base station and the one or more neighbour base stations is used to send the advertisement from the first base station to the one or more neighbour base stations.

Preferably, the uplink channel and/or the downlink channel are established by means of a standard random access channel message. The advertisement is sent from a special dedicated terminal transmitter of the first base station, the special dedicated terminal transmitter provided by means of the terminal unit, over said uplink channel as said RF channel to a dedicated uplink receiver of the one or more neighbour base stations.

Preferably, the terminal unit which is attached to or integrated in the first base station and/or the neighbour base stations is used for sending an advertisement request towards a certain neighbour base station by use of a standard random access channel message.

Preferably, a message which is intended to be sent from the first base station to the one or more neighbour base stations or in the opposite direction, e.g., a standard random access channel message or an advertisement, is marked in order to indicate that the transmitted information which is contained in or associated with the message has to be terminated in a processing functionality of the first base station and/or the one or more neighbour base stations. Preferably, this marked message is sent from a special dedicated uplink terminal transmitter of the first base station to one or more dedicated uplink receivers of the one or more neighbour base stations, The marking is detected by the one or more neighbour base stations. Triggered by the detection of the marking, the transmission of a reply containing configuration related information is triggered at the one or more neighbour base stations.

Preferably, the advertisement signalling in the uplink channel from a special terminal unit of the first base station provides a new communication relation between this first base station and the one or more neighbour base stations.

In a preferred embodiment of the invention, the advertisement is sent from a broadcast transmitter of the first base station by using a broadcast channel of the first base station as said radio frequency channel to a special radio frequency scanning receiver of the one or more neighbour base stations, provided by means of the terminal unit. This broadcast channel of the first base station is the standard broadcast channel existent from a base station. Preferably, in this embodiment, the (normal) broadcast transmitter or an enhanced (special) broadcast transmitter with higher output power and/or a more robust modulation scheme than standard terminals is used.

Preferably, the advertisement signalling in the broadcast channel to a special RF scanning receiver of the one or more neighbour base stations provides a new communication relation between this first base station and the one or more neighbour base stations.

In a preferred embodiment, information about a backhaul interface of the first base station, in particular address information associated with the backhaul interface, e.g., a communication address, of the first base station, is sent from the first base station to the one or more neighbour base stations. Preferably, said information is sent as a part of the advertisement message sent from the first base station to the one or more neighbour base stations. A reply to the advertisement may be sent from a backhaul interface of the one or more neighbour base stations to the backhaul interface of the first base station.

According to another preferred embodiment of the invention, a reply to the advertisement is sent from a downlink transmitter of the one or more neighbour base stations via the established downlink channel to a special dedicated terminal receiver of the first base station, the special dedicated terminal receiver provided by means of the terminal unit.

Preferably, said downlink channel which represents a dedicated signalling channel for sending the reply from the one or more neighbour base stations to the first base station is established by means of an extended protocol.

According to another preferred embodiment of the invention, one or more of the following data are transmitted with the advertisement and/or the reply: a position of a base station, a type of a base station (e.g., urban, rural), a cell type of a cell associated with a base station (e.g., macro, micro, pico), a cell sector parameter (e.g., number of served cell in a base station, antenna directions such as antenna main lobe directions, co-ordinates of cells), a transmission power to define a coverage area, an address and/or an identifier (e.g., an IP-address, a base station ID, a physical cell ID, a global cell ID, a tracking area ID, a country code, an operator code), radio parameter settings such as power settings, pilot pattern. HO parameters (e.g., thresholds, time-to-trigger values, cell individual offsets), scheduler parameters, capabilities like supported radio technologies (e.g., GSM, UMTS, HSPA, LTE, WiMAX) and relevant parameters, e.g., a time when a newly deployed base station, in particular the first base station, starts its operational mode (GSM = Global System for Mobile Communications; UMTS = Universal Mobile Telecommunications System; HSPA = High Speed Packet Access; WiMAX = World-wide Interoperability for Microwave Access).

Preferably, the first base station sends information about itself (= the first base station) such as its available identifiers, position, power and type of its base station cells (e.g. macro, micro, pico). A neighbour base station sends neighbourhood related information such as its own position, a type of that base station (e.g. urban, rural) and a type of its served cells, such as identifiers and its operational parameter settings, which can be used for self-configuration and self-optimisation purposes in the first base station.

Preferably, the terminal unit further comprises a special dedicated terminal receiver and/or a special dedicated terminal transmitter and/or a special radio frequency scanning receiver. The special dedicated terminal receiver may be used by the first base station to receive a message sent from a (standard) dedicated downlink transmitter of the one or more neighbour base stations. The special dedicated terminal transmitter may be used by the first base station to send a message to a (standard) dedicated uplink receiver of the one or more neighbour base stations. The special radio frequency scanning receiver may be used by the first base station to receive a message sent from a (standard) broadcast transmitter of the one or more neighbour base stations.

Preferably, the terminal unit further comprises a special broadcast uplink transmitter and/or a special uplink RF receiver. A message sent from the special broadcast uplink transmitter of the first base station may be received by the special uplink RF receiver of the one or more neighbour base stations. Likewise, a message sent from the special broadcast uplink transmitter of the one or more neighbour base stations may be received by the special uplink RF receiver of the first base station.

Preferably, the first base station further comprises an antenna array adapted to estimate a direction of the one or more neighbour base stations, e.g., an azimuth angle of the position of the one or more neighbour base stations with regard to the position of the first base station.

These as well as further features and advantages of the invention will be better appreciated by reading the following detailed description of presently preferred exemplary embodiments taken in conjunction with accompanying drawings of which:
- Fig. 1: is a block diagram of a cellular radio network comprising a first base station and a neighbour base station according to an embodiment of the invention; and
- Fig. 2: is a block diagram showing a data exchange between a first base station and a neighbour base station, and between the neighbour base station and a standard (= standalone) terminal.

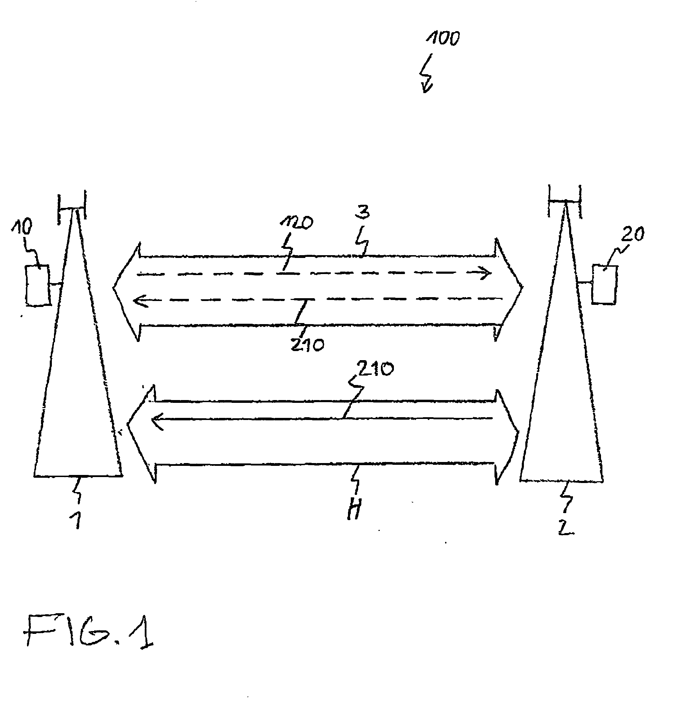

Fig. 1 shows a cellular radio network 100 with a first base station 1 and a neighbour base station 2 neighbouring the first base station 1, i.e., the radio coverage area of the neighbour base station 2 is adjacent to the radio coverage area of the first base station 1. The cellular radio network 100 may be a radio access network, e.g., operated in a 3GPP or an IEEE architecture. A special terminal unit 10 is attached / connected with the first base station 1. The adjective "special" in this context means that the terminal unit 10 is a dedicated terminal unit, a terminal unit which is specifically designed to operate in association with the first base station. It is also possible that the terminal unit 10 is integrated and implemented, respectively, into the first base station 1. A special terminal unit 20 is integrated and implemented, respectively, into the neighbour base station 2. The terminal unit 20 contains the same functionality as the terminal unit 10.

The terminal units 10, 20 may be separate units that are attached to the base stations 1 and 2, or the terminal units 10, 20 are integrated into the base stations 1 and 2, e.g., as electronics component that are connected with the electronics of the base stations 1 and 2. The terminal unit 10, 20 may comprise an interface for intercommunication with the base station, one or more transmitter/receiver units for providing messages to be sent and for receiving messages from another base station, and a control unit for executing the functionality the terminal unit 10, 20 provides to the base station.

Preferably, the terminal unit 10, 20 is composed of one or several interlinked computers, i.e., a hardware platform, a software platform basing on the hardware platform and several application programs executed by the system platform formed by the software and hardware platform. Here, the term "computer" is used in its broadest sense and may comprise electronic circuitry, microprocessing units, or electronic chips. The functionality of the terminal units 10, 20 is provided by the execution of these application programs. The application programs or a selected part of these application programs constitute a computer software product providing a communication service as described in the following, when executed on the system platform. Further, such computer software product is constituted by a storage medium storing these application programs or said selected part of application programs.

The first base station 1 may be a newly deployed base station of the cellular radio network 100 and establishing communication connections to one or more neighbouring base stations for self-configuration.

The first base station 1 and the neighbour base station 2 can communicate with each other via a wireless (radio) channel/interface 3 and a wire-line channel/interface H. The wireless channel 3 corresponds either between the transmission terminal 10, 20 and the receiving terminal 20, 10 or between transmission/receiving terminal unit 10, 20 and receiving/transmission base station 2, 1. In an E-UTRAN architecture, the wire-line channel H corresponds to the S1 or X2 interface connecting eNBs (UTRAN = UMTS Terrestrial Radio Access Network; E- UTRAN = Evolved UTRAN; eNB = evolved Node B). Alternatively, the wire-line channel H is a backhaul connection via the backbone of the cellular radio network 100.

The first base station 1 sends an advertisement message 120 to the neighbour base station. For example, this advertisement message 120 is sent from a special dedicated terminal transmitter of the first base station 1, provided by means of the terminal unit 10, to a dedicated uplink receiver of the neighbour base station 2 or to a dedicated uplink receiver of the terminal unit 20.

The neighbour base station 2 sends a reply 210 to said advertisement message 120 to the first base station 1. This reply 210 is sent via the wireless channel 3 and/or the wire-line channel H.

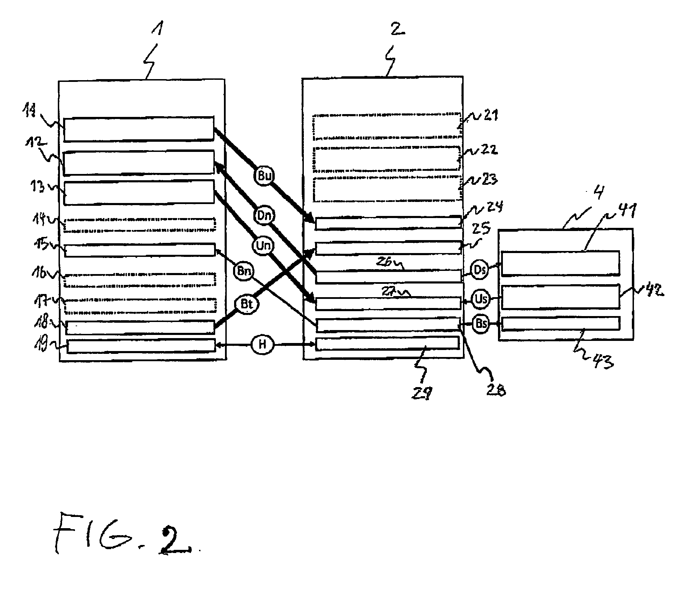

Fig. 2 shows the first base station 1 with a special terminal unit implemented into the first base station 1, a neighbour base station 2 with a special terminal unit implemented into the neighbour base station 2 neighbouring the first base station 1, and a standard terminal 4 in connection with the neighbour base station 2.

The first base station 1 comprises a special broadcast uplink transmitter 11, a special dedicated terminal receiver 12, a special dedicated terminal transmitter 13, a special uplink RF receiver 14, a special RF scanning receiver 15, a dedicated downlink transmitter 16, a dedicated uplink receiver 17, a broadcast transmitter 18, and a backhaul interface 19. The special dedicated terminal receiver 12 and the special dedicated terminal transmitter 13 and the special radio frequency scanning receiver 14 are provided to the first base station 1 by means of the terminal unit 10.

The neighbour base station 2 comprises a special broadcast uplink transmitter 21, a special dedicated terminal receiver 22, a special dedicated terminal transmitter 23, a special uplink RF receiver 24, a special RF scanning receiver 25, a dedicated downlink transmitter 26, a dedicated uplink receiver 27, a broadcast transmitter 28, and a backhaul interface 29. The special dedicated terminal receiver 22 and the special dedicated terminal transmitter 23 and the special radio frequency scanning receiver 24 are provided to the neighbour base station 2 by means of the special terminal unit.

The standard terminal 4 comprises a dedicated downlink receiver 41, a dedicated uplink transmitter 42, and a broadcast receiver 43,

One or more of the following plurality of different communication relations between the two base stations 1 and 2 may exist:

There may be a broadcast uplink channel Bu from the special broadcast uplink transmitter 11 of the first base station 1 to the special uplink RF receiver 24 of the neighbour base station 2, used for advertisement requests 120 to all neighbour base stations 2.

There may be a downlink channel Dn from the dedicated downlink transmitter 26 of the neighbour base station 2 to the special dedicated terminal receiver 12 of the first base station 1.

There may be an uplink channel Un from the special dedicated terminal transmitter 13 of the first base station 1 to the dedicated uplink receiver 27 of the neighbour base station 2, used to establish a dedicated communication connection and to communicate over it.

There may be a broadcast channel Bn from the broadcast transmitter 28 of the neighbour base station 2 to the special RF scanning receiver 15 of the first base station 1, used for transmission of broadcast information and needed to setup the downlink channel Dn and the uplink channel Un.

There may be a broadcast channel Bt from the broadcast transmitter 18 of the first base station 1 to the special RF scanning receiver 25 of the neighbour base station 2. The broadcast channel Bt may be used with a normal or a special (i.e. with excess power burst) broadcast transmitter to send information to the neighbour base station 2.

There may be a backhaul communication channel H between the backhaul interface 19 of the first base station 1 and the backhaul interface 29 of the neighbour base station 2, used for reply messages from the neighbour base station 2 to the first base station 1.

One or more of the following plurality of different communication relations between the neighbour base station 2 and the standard terminal 4 may exist:

There may be a downlink channel Ds from the dedicated downlink transmitter 26 of the neighbour base station 2 to the dedicated downlink receiver 41 of the standard terminal 4.

There may be a uplink channel Us from the dedicated uplink transmitter 42 of the standard terminal 4 to the dedicated uplink receiver 27 of the neighbour base station 2.

There may be a broadcast channel Bs from the broadcast transmitter 28 of the neighbour base station 2 to the broadcast receiver 43 of the standard terminal 4.

## Claims

1. A method of self-configuration of a cellular radio network (100) comprising a first base station (1) and one or more neighbour base stations (2) neighbouring the first base station (1),
the method comprising the steps of:
sending an advertisement (120) from the first base station (1) over a radio frequency channel (3) to the one or more neighbour base stations (2) by means of a terminal unit (10, 20) providing terminal capabilities which is attached to or integrated in the first base station (1) and/or the one or more neighbour base stations (2) whereby a broadcast uplink channel (Bu) is provided, by means of the terminal unit (10, 20), as said radio frequency channel (3) for sending the advertisement (120) from the first base station (1) to the one or more neighbour base stations (2); and
based on this advertisement (120), exchanging data between the first base station (1) and the one or more neighbour base stations (2) for self-configuration of the cellular radio network (100) whereby the first base station (1) sends information about itself and a neighbour base station of the one or more neighbour base stations, (2) said information comprising neighbourhood related parameters which are used for self-configuration and self-optimisation purposes in the first base station (1).

2. The method of claim 1,
**characterised in**
**that** the method further comprises the step of:
sending the advertisement (120) from a special broadcast uplink transmitter (11) of the first base station (1), provided by means of the terminal unit (10, 20), over the broadcast uplink channel (Bu) to a special uplink radio frequency receiver (24) of the one or more neighbour base stations (2), provided by means of the terminal unit (10, 20).

3. A base station (1) of a cellular radio network (100), the cellular radio network (100) further comprising one or more neighbour base stations (2) neighbouring the base station (1), whereby said base station (1) comprises a terminal unit (10) adapted to provide terminal capabilities integrated in said base station (1) or an interface for attaching a terminal unit (10) adapted to provide terminal capabilities, said base station (1) further comprising a control unit adapted to send an advertisement (120) over a radio frequency channel (3) to the one or more neighbour base stations (2) by means of the terminal unit (10), said base station being adapted to send the advertisement (120) to the one or more neighbour base stations (2) over a broadcast uplink channel being provided as said radio frequency channel by mean of the terminal unit (10,20) and, based on this advertisement (120), said base station (1) being adapted to exchange data with said one or more neighbour base stations (2) for self-configuration of the cellular radio network (100) whereby the control unit is adapted to send information about said base station (1) and to receive, from a neighbour base station of the one or more neighbour base stations (2), an information comprising neighbourhood related parameters which are used for self-configuration and self-optimisation purposes.

## Patentansprüche

1. Verfahren zur Selbstkonfiguration eines zellularen Funknetzwerks (100) mit einer ersten Basisstation (1) und einer oder mehreren Nachbar-Basisstationen (2), welche mit der ersten Basisstation (1) benachbart sind,
wobei das Verfahren die folgenden Schritte umfasst:
Senden einer Ankündigung (120) von der ersten Basisstation (1) über einen Funkfrequenzkanal (3) an die eine oder mehreren Nachbar-Basisstationen (2) anhand eines Endgeräts (10, 20) mit Endgerät-Fähigkeiten, welches mit der ersten Basisstation (1) und/oder einer oder mehreren Nachbar-Basisstationen (2) verbunden oder darin integriert ist, wobei anhand des Endgeräts (10, 20) ein Uplink-Rundfunkkanal (Bu) als der besagte Funkfrequenzkanal (3) zum Senden der Ankündigung (120) von der ersten Basisstation (1) an die eine oder mehreren Nachbar-Basisstationen (2) bereitgestellt wird;
und
auf der Basis dieser Ankündigung (120), Austauschen von Daten zwischen der ersten Basisstation (1) und der einen oder den mehreren Nachbar-Basisstationen (2) für die Selbstkonfiguration des zellularen Funknetzwerks (100), wobei die erste Basisstation (1) Informationen über sich selbst und eine Nachbar-Basisstation der einen oder mehreren Nachbar-Basisstationen (2) sendet, wobei die besagten Informationen nachbarschaftsbezogene Parameter, welche zum Zweck der Selbstkonfiguration und der Selbstoptimierung in der ersten Basisstation (1) verwendet werden, umfassen.

2. Das Verfahren nach Anspruch 1,
**dadurch gekennzeichnet,**
**dass** das Verfahren weiterhin den folgenden Schritt umfasst:
Senden der Ankündigung (120) von einem speziellen Uplink-Rundfunksender (11) der ersten Basisstation (1), welcher anhand des Endgeräts (10, 20) bereitgestellt wird, über den Uplink-Rundfunkkanal (Bu) an einen speziellen Uplink-Funkfrequenzempfänger (24) der einen oder der mehreren Nachbar-Basisstationen (2), welcher anhand des Endgeräts (10, 20) bereitgestellt wird.

3. Basisstation (1) eines zellularen Funknetzwerks (100), wobei das zellulare Funknetzwerk (100) weiterhin eine oder mehrere Nachbar-Basisstationen (2), welche mit der Basisstation (1) benachbart sind, umfasst, wobei die besagte Basisstation (1) ein Endgerät (10), welches dazu ausgelegt ist, in der besagten Basisstation (1) integrierte Endgerät-Fähigkeiten bereitzustellen, oder eine Schnittstelle zum Verbinden eines Endgeräts (10), welches dazu ausgelegt ist, Endgerät-Fähigkeiten bereitzustellen, umfasst, wobei die besagte Basisstation (1) weiterhin eine Steuereinheit umfasst, welche dazu ausgelegt ist, eine Ankündigung (120) über einen Funkfrequenzkanal (3) an eine oder mehrere Nachbarstationen (2) anhand des Endgeräts (10) zu senden, wobei die besagte Basisstation dazu ausgelegt ist, die Ankündigung (120) über einen Uplink-Rundfunkkanal, welcher anhand des Endgeräts (10, 20) als der besagte Funkfrequenzkanal bereitgestellt wird, an die eine oder mehreren Nachbar-Basisstationen (2) zu senden und, auf der Basis dieser Ankündigung (120), die besagte Basisstation (1) dazu ausgelegt ist, Daten mit der besagten einen oder den besagten mehreren Nachbar-Basisstation(en) (2) für die Selbstkonfiguration des zellularen Funknetzwerks (100) auszutauschen, wobei die Steuereinheit dazu ausgelegt ist, Informationen über die besagte Basisstation (1) zu senden und von einer Nachbar-Basisstation der einen oder mehreren Nachbar-Basisstationen (2) eine Information, welche nachbarschaftsbezogene Parameter, die zum Zweck der Selbstkonfiguration und der Selbstoptimierung verwendet werden, umfasst, zu empfangen.

## Revendications

1. Procédé d'autoconfiguration d'un réseau radiocellulaire (100) comprenant une première station de base (1) et une ou plusieurs stations de base voisines (2) à proximité de la première station de base (1),
le procédé comprenant les étapes de :
envoi d'une annonce (120) depuis la première station de base (1) sur un canal de radiofréquence (3) à une ou plusieurs stations de base voisines (2) au moyen d'une unité terminale (10, 20) fournissant des capacités de terminal, qui est fixée à ou intégrée dans la première station de base (1) et/ou la ou les stations de base voisines (2), dans lequel un canal de diffusion montante (Bu) est fourni, au moyen de l'unité terminale (10, 20), comme ledit canal de radiofréquence (3) pour envoyer l'annonce (120) depuis la première station de base (1) à la ou les stations de base voisines (2) ;
et
sur la base de cette annonce (120), échange de données entre la première station de base (1) et la ou les stations de base voisines (2) pour l'autoconfiguration du réseau radiocellulaire (100), dans lequel la première station de base (1) envoie des informations sur elle-même et une station de base voisine à la ou les stations de base voisines (2), lesdites informations comprenant des paramètres de proximité qui sont utilisés pour l'autoconfiguration et l'auto-optimisation dans la première station de base (1).

2. Procédé selon la revendication 1,
**caractérisé en ce que**
le procédé comprend en outre l'étape suivante :
envoi de l'annonce (120) depuis un émetteur de diffusion en liaison montante spécial (11) de la première station de base (1), fourni au moyen de l'unité terminale (10, 20), sur le canal de diffusion montante (Bu), à un récepteur radiofréquence en liaison montante spécial (24) de une ou plusieurs stations de base voisines (2), fourni au moyen de l'unité terminale (10, 20).

3. Station de base (1) d'un réseau radiocellulaire (100), le réseau radiocellulaire (100) comprenant en outre une ou plusieurs stations de base voisines (2) à proximité de la station de base (1), dans lequel ladite station de base (1) comprend une unité terminale (10) adaptée pour fournir des capacités de terminal intégrées dans ladite station de base (1) ou une interface pour fixer une unité terminale (10) adaptée pour fournir des capacités de terminal, ladite station de base (1) comprenant en outre une unité de commande adaptée pour envoyer une annonce (120) sur un canal de radiofréquence (3) à la ou les stations de base voisines (2) au moyen de l'unité terminale (10), ladite station de base étant adaptée pour envoyer l'annonce (120) sur un canal de diffusion montante prévu en tant que ledit canal de radiofréquence au moyen de l'unité terminale (10, 20) à la ou les stations de base voisines (2) et, sur la base de cette annonce (120), ladite station de base (1) étant adaptée pour échanger des données avec lesdites une ou plusieurs stations de base voisines (2) pour l'autoconfiguration du réseau radiocellulaire (100), dans lequel l'unité de commande est adaptée pour envoyer des informations sur ladite station de base (1) et pour recevoir, depuis une station de base voisine de la ou des stations de base voisines (2), des informations comprenant des paramètres de proximité qui sont utilisés pour l'autoconfiguration et l'auto-optimisation.
